# EUROPEAN PATENT SPECIFICATION

(11) **EP 1 883 552 B1**
(45) Date of publication and mention of the grant of the patent: **20.06.2012**
(21) Application number: 06759054.7
(22) Date of filing: 04.05.2006
(51) Int. Cl.: B60K 6/10, B60L 9/00

(54) **PLUG-IN HYBRID VEHICLE WITH FAST ENERGY STORAGE**
EINSTECK-HYBRIDFAHRZEUG MIT SCHNELLER ENERGIESPEICHERUNG
VEHICULE HYBRIDE ENFICHABLE A STOCKAGE D'ENERGIE RAPIDE

(30) Priority: 05.05.2005 US 594784 P; 27.06.2005 US 595367 P; 23.09.2005 US 596443 P
(43) Date of publication of application: 06.02.2008
(73) Proprietor: AFS Trinity Power Corporation, Bellevue, WA 98004 (US)
(72) Inventor: BENDER, Donald, Arthur, San Ramon, California 94582 (US); DESHMANE, Atul, Bellingham, Washington 98226 (US); MEANS, Andrew, Eldon, Livermore, California 94550 (US)
(74) Representative: Röthinger, Rainer
(86) International application number: PCT/US2006/017180
(87) International publication number: WO 2006/121761

(56) References cited:
- EP-A1- 1 034 968
- US-A- 3 566 717
- US-A- 4 233 858
- US-A- 4 423 794
- US-A- 5 318 142
- US-A1- 2005 061 561
- US-B1- 6 229 279
- US-B1- 6 370 050
- US-B2- 6 617 703
- US-B2- 6 930 405
- KEMPTON ET AL.: 'Vehicle-to-Grid Power: Battery, Hybrid, and Fuel Cell Vehicles as Resources for Distributed Electric Power in California' pages 1 - 75, XP007900916

## Description

### Field of Invention

This invention relates to plug-in hybrid propulsion systems for cars, trucks, and buses where the energy storage element of the hybrid drive train may be charged with externally supplied electricity as well as energy from the engine or regenerative braking.

In particular, the invention relates to plug-in hybrids that can provide services to the electrical utility when the vehicle is connected to the utility grid.

### Related Art

Existing products commonly found in the marketplace include conventional hybrid vehicles such as the Toyota™ Prius™, Honda™ Insight™, and Ford™ Escape™ Hybrid™. More closely related to the present invention are prototype Daimler Chrysler Sprinter plug-in hybrid vans.

The main problem with existing conventional hybrids is that the full potential of conventional hybrid propulsion is not realized due to limited all-electric travel range. This problem is addressed by increasing the energy storage capacity of the vehicle to allow for greater all-electric range. The energy storage system may be charged from an external supply to offset and reduce fuel consumption. This type of propulsion system is known as a plug-in hybrid.

The main problems with existing plug-in hybrid vehicles are the cost of batteries and limited battery life. While conventional hybrid propulsion sized for a car uses energy storage with a capacity of about 1 kWh, plug-in hybrid cars require energy storage exceeding 5 kWh. The plug-in hybrid battery system must be deeply cycled in order to obtain useful all-electric range within a reasonable physical weight and volume. Deep cycling reduces battery life. The plug-in hybrid battery is much larger and proportionately more expensive than the battery in a conventional hybrid vehicle. Therefore, the cost penalty associated with a plug-in hybrid is more severe than for a conventional hybrid.

An additional problem with batteries used for hybrid vehicles is that maximizing available energy storage requires constraining such environmental conditions of the batteries as temperature. Conditioning of the environment of the battery is required to attain tolerable durability.

Some electric power grids in the U.S. are operated not by utilities but by separate regional entities called Independent System Operators (ISO). For example, the California Independent System Operator (CAISO) controls the grid for the entire State of California. An ISO purchases a variety of ancillary services that are used to regulate power flows, voltage stability and frequency on the grid. These include:
o peak power
o baseload power
o spinning reserves
o regulation services
o backup power
o renewable energy time shifting

Regulation service is necessary because the electric load on the grid is constantly changing as people turn on or off appliances, motors and machinery. This constantly changing load leads to small voltage imbalances at various locations on the grid. Changing load can also cause small changes in generator speed leading to frequency variations above and below 60 Hz. Since motors, clocks, computers and most other devices require constant electric frequency to operate accurately, utilities maintain a 60 Hz frequency within specified tolerances. Deviations from the 60 Hz frequency are called Area Control Error (ACE).

Regulation service is provided today by small, frequent adjustments to the output of each power plant. Computer models use frequency measurements throughout the grid to determine which power plants should generate more and which should generate less in order to minimize ACE at all points on the grid. Often one power plant will be providing Regulation Up service at the same time that another is providing Regulation Down service.

In California, regulation service is provided partly by the electric utilities (self-provided regulation) and partly by merchant power plants that are paid for their services by the ISO. A power plant cannot operate at its maximum output level if it is committed to offering Regulation Up service. That is because it must be prepared to make further upward adjustments in generation to boost voltage if called upon. In California, regulation service providers must be capable of changing their output within 10 minutes of being asked to do so and must be able to stay online at the required output level for at least two hours.

US 6,617,703 B2 may be construed to disclose a system including a first motor-generator; speed change device disposed between an engine and a first wheel drive shaft; demanded braking force detection device for detecting braking force demanded by the driver; engine braking force calculation device for calculating engine braking force; and regenerative braking force calculation device for calculating regenerative braking force resulted by regenerative power generation of the first motor-generator. Gear ratio or shift points of the speed change device is controlled on the basis of information from the demanded braking force detection device, the engine braking force calculation device and the regenerative braking force calculation device.

EP 1 034 968 A1 may be construed to disclose a multiple power source system having an inverter connected to a reactance, such as three-phase coils in a motor, a high voltage battery is connected with a low voltage battery via one transistor and one diode included in the inverter and one phase coil of the three-phase motor.

US 6,370,050 B1 may be construed to disclose an isolated and soft-switched power converter is used for DC/DC and DC/DC/AC power conversion. The power converter includes two resonant tank circuits coupled back-to-back through an isolation transformer. Each resonant tank circuit includes a pair of resonant capacitors connected in series as a resonant leg, a pair of tank capacitors connected in series as a tank leg, and a pair of switching devices with anti-parallel clamping diodes coupled in series as resonant switches and clamping devices for the resonant leg.

US 2005/061561 A1 may be construed to disclose a stabilized electric distribution system for use in a vehicle having electric assist. The system electrically couples an electric assist bus to an accessory load bus while protecting the first electrical bus from electric assist and regenerative braking induced voltage variations. An energy management controller selectively controls each of a electric motor/generator, a DC/DC converter, and an alternator to affect electric energy distribution within the system.

### Brief Summary of the Invention

There is provided a hybrid electric vehicle powertrain according to claim 1, comprising an internal combustion engine; a first electric motor-generator connected to the engine and used to start the engine or supply electricity to the second motor-generator; a second electric motor generator that supplies traction power to the vehicle wheels, a first electrical energy storage device, a second electrical energy storage device, a power electronics system, a control system, and a charging system.

Developments are set forth in the dependent claims.

Preferably, the first electrical energy storage device is a battery that delivers or absorbs electrical energy when the vehicle is operated as a hybrid or when the vehicle is operated using stored electrical energy only.

Preferably, the second electrical energy storage device is a flywheel, a capacitor or ultracapacitor or supercapacitor, or a battery that absorbs or delivers current only as necessary to protect the first energy storage device from current above the damage threshold for the first energy storage device.

Preferably, a power electronics system, responsive to the control system, transfers electrical energy from each electrical energy storage device or electric motor- generator to each other electrical energy storage device or electric motor- generator.

Preferably, the control system has means to determine and control the energy flow path through the power electronics. The charging system uses externally supplied electricity to recharge either or both the first energy storage device and the second energy storage device.

Preferably, the system comprises (contains at least) either a fuel powered engine or 5 a fuel cell, a battery, a fast energy storage system, power converters, controllers, drive motors, an electrical distribution system, and a drive train.

Preferably, one of three devices is used for fast energy storage. (1) A flywheel apparatus comprises a rotor, a motor-generator, bearings, a housing, a power 0 converter and controller, and ancillary subsystems. (2) A small battery optimized for high cycle life. (3) A super-capacitor bank comprises a number of electrostatic energy storage components.

Preferably, a preferred embodiment of the apparatus comprises a battery pack, a fast energy storage device, an engine, a transmission, power electronics, and controls. A preferred embodiment of the method comprises use of the fast energy storage device to perform short, frequent, high intensity charge and discharge functions to preserve the battery to provide average power for driving in electric-only mode.

The power electronics package comprises a number of power conversion devices to manage the flow of power between the various subsystems. One conversion device is used for grid interface. Associated with the grid interface power electronics are a controller to manage the two-way flow 5 of power between the vehicle and the grid which may include a device for communicating with a utility, independent system operator, aggregator of services, or other relevant entity.

The grid interface system may comprise some or all of the following elements:
o GPS-based vehicle location sensing device
o Two way data communications
o Charge/discharge control unit
o "Plug" or hookup device capable of bi-directional power flows
o External (garage-installed) charger for bi-directional power flows
o Charger(s) at workplace parking lots and garages

A purpose of the invention is to provide a plug-in hybrid drive-train system that will yield at least a 150,000 mile durability for a passenger car in ordinary use.

A second purpose of the invention is to combine the battery and a separate fast energy storage element of a plug-in hybrid to provide services to the electric distribution grid when the vehicle is connected to the grid where Vehicle to Grid (V2G) systems allow the electric power grid to benefit from many small power sources connected to it at random and dispersed locations. Regulation services have the best potential to use the capabilities of a vehicle-based energy storage system to add value to the grid but other ancillary services may be comparably beneficial. Ancillary services provided by a dispersed fleet of vehicles may be cheaper and more effective than regulation services provided by power plants today. A large population of V2G vehicles would be able to perform frequency stabilization by sourcing or sinking energy pulses thereby mitigating the need for frequent adjustment of power plant output. With respect to V2G applications, the main problem with existing conventional hybrids is that providing ancillary services to the electrical distribution system is likely to entail a sufficient number and depth of charge-discharge cycles to degrade the performance of the battery and reduce battery life. This problem is exacerbated when cycling involves high current operation at a low state of charge.

A third purpose of the invention is to provide distributed storage for non-firm sources of electricity such as wind. Wind patterns in some parts of the world (the American Midwest and West Texas for example) are such that there is more wind at night than in the daytime. A large population of V2G vehicles would be able to absorb non-dispatchable, off-peak wind generation to charge their batteries during off-peak hours when energy is inexpensive.

One advantage of the invention is a reduced number of charge discharge cycles of the battery with correspondingly increased battery life. This is accomplished by using a fast energy storage system that has a cycle life exceeding battery cycle life by at least 10x and sizing the fast energy storage system to source or sink brief, frequent pulses and provide most or all of the V2G ancillary services.

A second advantage of the invention is that fast energy storage reduces the life-cycle cost of a battery. Without fast energy storage, the battery will experience a large number of shallow cycles and occasional high current pulses when the battery is at a low state of charge. The invention reduces the number of shallow charge cycles that the battery would experience by as much as 90%-100% and protects the battery from high current pulses. In particular, the fast energy storage system protects the battery from the deleterious effects of high rate discharge while at a low state of charge. By doing so, the invention extends life of the battery so that replacement is not required for the life of the vehicle.

A third advantage of the invention is reduced total weight of the energy storage system. The combined weight of the battery and fast energy storage device are less than the weight of a battery sized to handle frequent cycling and high current pulses.

A fourth advantage of the invention is improved durability of the energy storage system.

A fifth advantage of the invention is that fuel economy with respect to conventional vehicles is improved. The invention enables as much as 2X improvement in fuel efficiency and an improvement in fuel economy that, depending on the driving cycle, may be as much as 5x for the typical driver. Current hybrids provide a 30-50% improvement in fuel economy.

The invention requires integration of electrochemical, electrostatic, and electro-kinetic storage technology. The apparatus and its function have application as a distributed energy system.

Further aspects of the invention will become apparent from consideration of the drawings and the ensuing description of preferred embodiments of the invention. A person skilled in the art will realize that other embodiments of the invention are possible and that the details of the invention can be modified in a number of respects, all without departing from the inventive concept. Thus, the following drawings and description are to be regarded as illustrative in nature and not restrictive.

### Brief Description of the Drawings

The features of the invention will be better understood by reference to the accompanying drawings that illustrate presently preferred embodiments of the invention. In the drawings:
Figure 1 is a drawing of the plug-in hybrid system.
Figure 2 is a drawing of a plug-in hybrid system with clutches.
Figure 3 is a drawing of a plug-in parallel hybrid system.
Figure 4 is a drawing of a plug-in series hybrid system.
Figure 5 is a drawing of a plug-in series hybrid system with four-wheel drive.
Figure 6 is a drawing of a plug-in series hybrid system with a fuel cell.
Figure 7 is a drawing of an electronic switch assembly.
Figure 8 is a schematic drawing of the power converter and controller and attached devices for a system using three motor/generators and a capacitor fast energy storage system.
Figure 9 is a schematic drawing of the power converter and controller and attached devices for a system using three motor/generators and a flywheel fast energy storage system.

The following reference numerals are used to indicate the parts and environment of the invention on the drawings:
1 Engine
2 First motor/generator
3 Second motor/generator
4 Transmission
5 Clutch
6 Power converter and controller
7 Battery
8 Fast energy storage (flywheel, high cycle battery, or capacitor)
9 Differential
10 Axle
11 Wheel
12 Plug/disconnect
13 Stationary V2G interface
14 Grid
15 Driveshaft
16 Fuel Cell
17 switch module
18 DC bus
19 DC bus common
20 DC bus capacitor
21 inductor
22 transformer
23 AC link
24 charger input/output
25 DC supply
26 flywheel fast energy storage
27 gate drive
28 controller
29 diode
30 insulated gate bipolar transistor (IGBT)
31 rear motor/generator (MGR)

### Detailed Description of the Invention

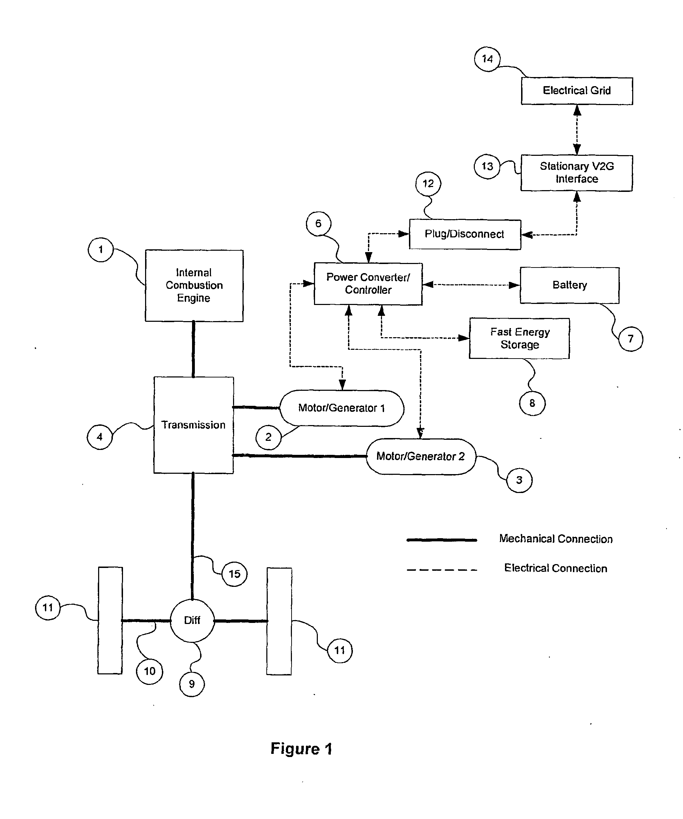

Referring to Fig. 1, a preferred embodiment of apparatus is disclosed. The invention comprises an engine **1** connected to a transmission **4**. The engine **1** may be connected through a clutch or may be connected through fixed gears or shafting. A first motor/generator **2** is connected to the shaft either on the engine **1** or the transmission **4** side of the engine/transmission interface. The transmission **4** transfers power from the engine **1** and first motor/generator **2** through the transmission **4** to the driveshaft **15**, differential **9**, and then the axle **10** and the wheels **11**. A second motor/generator 3 is connected to the transmission **4** at a point in the transmission **4** closer to the output. The drivetrain may use zero, one, two, or three clutches to selectively disengage the engine **1** or an individual motor/generator **2**, **3**.

The drivetrain comprises the driveshaft **15** and differential **9**, which both may be part of the transmission **4** or separate from it, and the axle **10** or split shaft.

The motor/generators **2**, **3** may be mounted in-line with the drive train or may be connected to the drivetrain through gears, belts or chains, or hydraulics.

The battery **7** preferentially uses lithium chemistry but may also use NiMH, NiCAD, or Pb:acid. The fast energy storage device **8** may comprise a flywheel, a capacitor, or a high power battery. Preferentially, the flywheel uses a high-speed rotor housed in an evacuated chamber and integral electronics to drive the flywheel. Alternatively, the flywheel may be of any type that incorporates a rotor and built in motor/generator so that energy may be stored and retrieved electrically. The capacitor may be of any type including super capacitors, ultra capacitors and electrolytic capacitors. The fast energy storage device **8** may have an energy storage capacity that is considerably smaller than the capacity of the battery **7**.

In the preferred embodiment, the engine **1** is a small piston engine **1** fueled with gasoline. Alternatively, the engine **1** may be an internal combustion engine **1** fueled with gasoline, ethanol, flex-fuel, diesel fuel, bio-diesel, natural gas, propane, or hydrogen.

A fast energy storage device **8** and a battery **7** are connected to a power converter and controller **6**. The power converter and controller **6** directs the flow of energy between the flywheel or capacitor **8**, the battery **7**, the first motor/generator **2** and the second motor/generator **3.** All the elements that store or use electricity (**2**, **3**, **7**, and **8**) may either source or sink electricity. The power converter and controller 6 may comprise a single assembly or subassemblies. The subassemblies may be collocated within a single module or they may be housed as separate modules. They may be located together or dispersed throughout the vehicle.

The interface between the vehicle and the grid may comprise a plug and receptacle **12** where AC power to the vehicle is converted to DC power on-board. The AC supply may by 110V, 220V, 480V single or three phase or other commercially supplied AC electricity. Alternatively, a stationary V2G interface **13** that has bi-directional power handling capability may provide V2G service. The stationary V2G interface **13** may communicate with a utility in order to dispatch the V2G resource or to allow isolation by the utility. The stationary V2G interface **13** may connect to the vehicle through a DC or AC link and a plug/receptacle **12.**

Operation of the invention involves driving in a number of different modes of operation.

In the first driving mode, the engine **1** supplies motive power to the wheels **11** and the first motor/generator **2** and the second motor/generator **3** are free to rotate but are not energized.

In the second driving mode of operation, the engine **1** is turned off and all motive power is provided using either the first motor/generator **2** or the second motor/generator **3** or both. This mode is referred to as EV mode. In this mode, electrical energy is supplied by either the fast energy storage device 8 and the battery 7 in a combination determined by the power converter and controller **6**.

In the third driving mode of operation, motive power is provided by both the engine **1** and either the first motor/generator **2**, the second motor/generator **3** or both motor/generators. In this mode, electrical energy is supplied by either the fast energy storage device **8** and/or the battery **7** in a combination determined by the power converter and controller **6**.

In the fourth driving mode of operation, the vehicle is decelerating or descending on a grade and energy is recovered regeneratively. In this mode of operation, retarding torque is applied to the transmission **4** by either the first motor/generator **2,** the second motors/generator **3** or both motor/generators. In this mode of operation, one or both motor/generators functions or function as generators and convert recovered kinetic energy of the vehicle into electricity. The electricity is delivered to either the fast energy storage device **8** or the battery **7.** The flow of electricity to the energy storage devices is directed by the power converter and controller **6.** In this mode of operation, the engine **1** may be rotating or not rotating.

In the fifth driving mode of operation, the engine **1** drives the first motor/generator **2** so that it produces electricity to charge the battery **7** or the fast energy storage device **8** or both in a combination determined by the power converter and controller **6.** In this mode, the vehicle may be either stopped or moving.

Performing V2G services involves a number of different V2G modes of operation.

In the first V2G mode of operation, the grid sources energy through the stationary V2G interface **13** to the plug/receptacle **12** and subsequently the power converter and controller **6.** The controller **6** uses this energy to charge either the fast energy storage device **8** or the battery **7** or both.

In the second V2G mode of operation, energy from the fast energy storage device **8** is extracted by the power converter and controller 6 and supplied to the grid **14** via the plug/receptacle **12** and the stationary V2G interface **13.**

In the third V2G mode of operation, energy from battery **7** is extracted by the power converter and controller **6** and supplied to the grid **14** via the plug/receptacle **12** and the stationary V2G interface **13.**

In the fourth V2G mode of operation, energy from engine **1** is converted to electricity by either or both of the motor generators **2** and **3** and is then extracted by the power converter and controller **6** and supplied to the grid **14** via the plug/receptacle **12** and the stationary V2G interface **13.** Any of the modes of V2G operation may be commanded automatically by software residing in the vehicle or may be commanded by an outside entity such as a utility, an independent system operator, an aggregator of services, or any other end user.

The fast energy storage device **8** is tolerant of frequent cycling and high power operation while the battery **7** is not. In all modes of operation, the power converter and controller **6** typically directs the flow of energy such that the number of charge and discharge events experienced by the battery **7** is minimized. Additionally, the fast energy storage device **8** is operated to minimize the magnitude and extent of high power operation of the battery **7.** By protecting the battery **7** from excessive cycling and excessive high power operation, several benefits accrue. The durability of the combined energy storage system is improved compared to using a battery **7** without a fast energy storage device **8.** The battery **7** may be operated over a deeper depth of discharge than would otherwise be possible without the protection of the fast energy storage device **8.** Thus a given all-electric range of travel can be attained with a much smaller battery 7 than would be possible without the protection of a fast energy storage device **8.**

Many other modes are possible where the functions of the five defined modes are used in combination.

Many variations of the invention will occur to those skilled in the art.

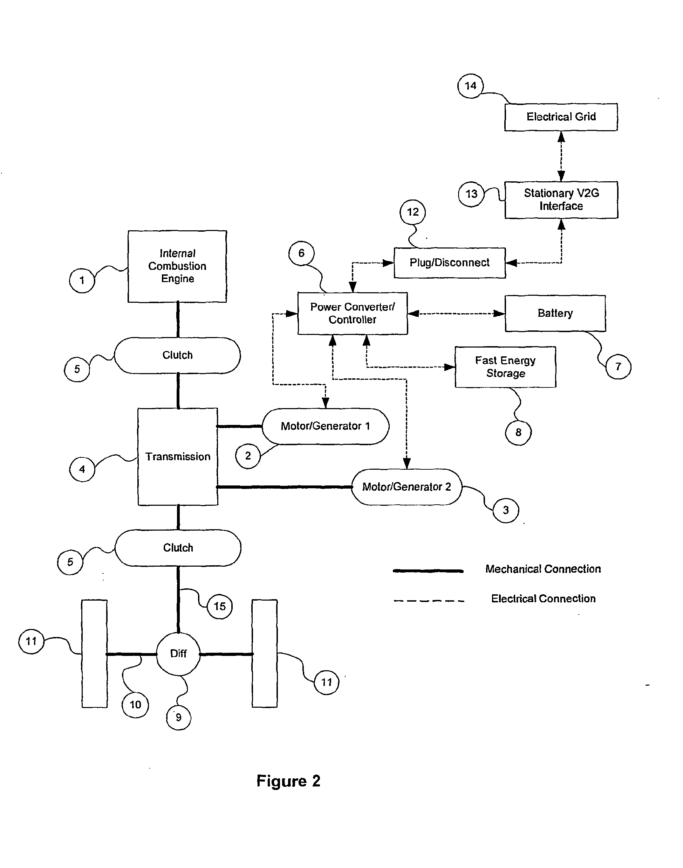

Referring to Figure 2, the first variation uses one or more clutches **5** to selectively disengage the engine **1,** the first motor/generator **2** or the second motor/generator **3.**

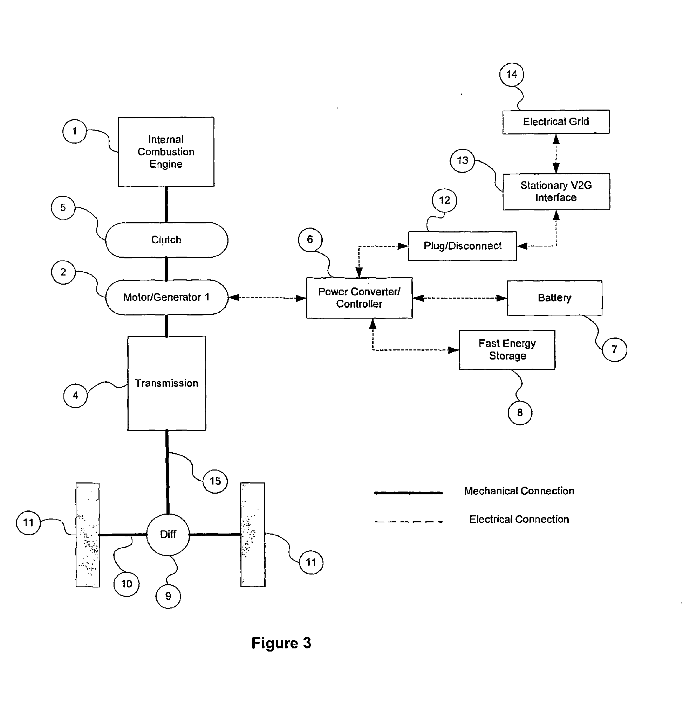

Referring to Figure 3, a second variation is the parallel configuration in which only one motor/generator (the first motor/generator **2**) is used. The transmission **4** may be an automatic or manual transmission that may include zero, one, or two clutches **5.**

In either the first variation or the second variation, the transmission **4** may support two-wheel drive as shown. Alternatively, the transmission **4** may be capable of full time or part time four-wheel drive.

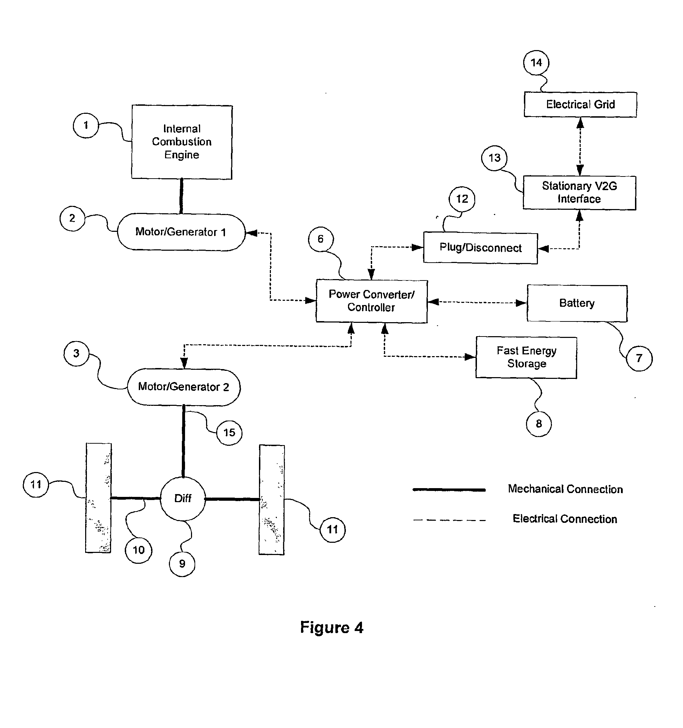

Referring to Figure 4, the third variation eliminates the transmission **4** entirely. In this case, the first motor/generator **2** is connected directly to the engine **1.** The first motor/generator **2** functions primarily as a generator but may also function as a motor that could be used to start the engine **1**. The second motor/generator **3** powers the wheels **11** directly or indirectly. The second motor/generator **3** is connected to the differential **9**, the driveshaft, or the wheels **11** directly. The second motor/generator **3** may be connected through fixed gearing or other compact and limited drivetrain components or subassemblies. All motive power is transmitted from a point of point of generation or storage to the drive motor electrically. This configuration is a series plug-in hybrid or a series hybrid.

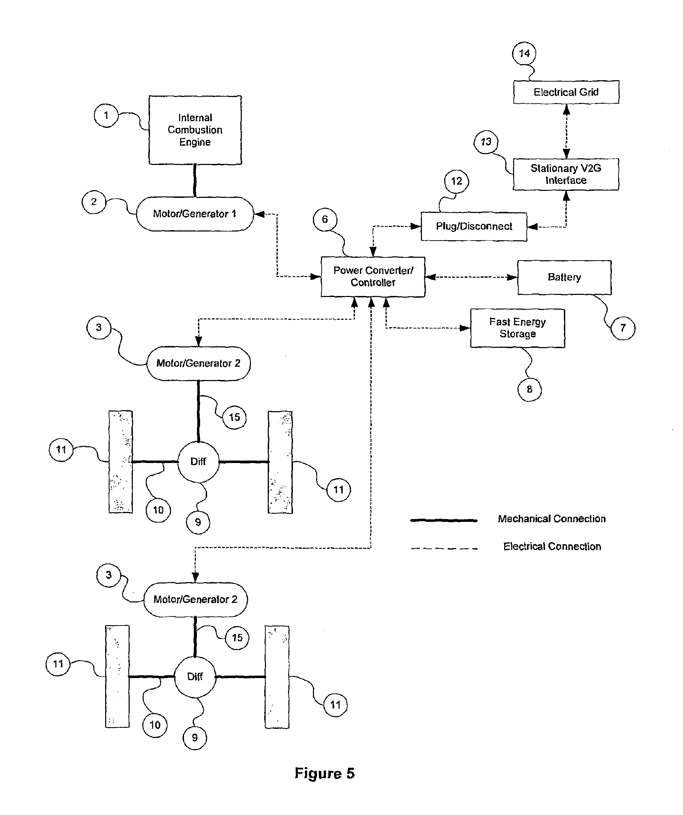

Referring to Figure 5, a fourth variation uses multiple drive motors instead of a single second motor/generator **3**.

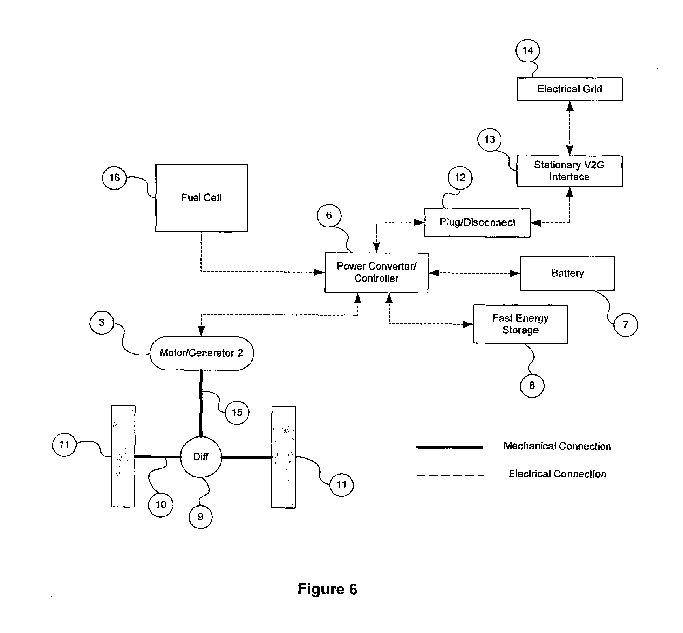

Referring to Figure 6, a fifth variation uses the series hybrid configuration from above and uses a fuel cell to generate electricity. The fuel cell replaces the engine **1** and the first motor/generator **2**. In this variation, a fast energy storage device **8** and a battery **7** are connected to a power converter and controller **6**. The power converter and controller **6** directs the flow of power between the fast energy storage device **8**, the battery **7**, and the second motor/generator **3**. All the elements that store or use electricity (**3**, **7**, and **8**) may either source or sink electricity. In this variation the fast energy storage device **8** protects the battery **7** from severe or frequent charge and discharge events. Additionally, in this configuration, the fast energy storage device **8** protects the fuel cell **16** by providing immediate power for acceleration where the fuel cell has poor throttle response and could be damaged by such an event.

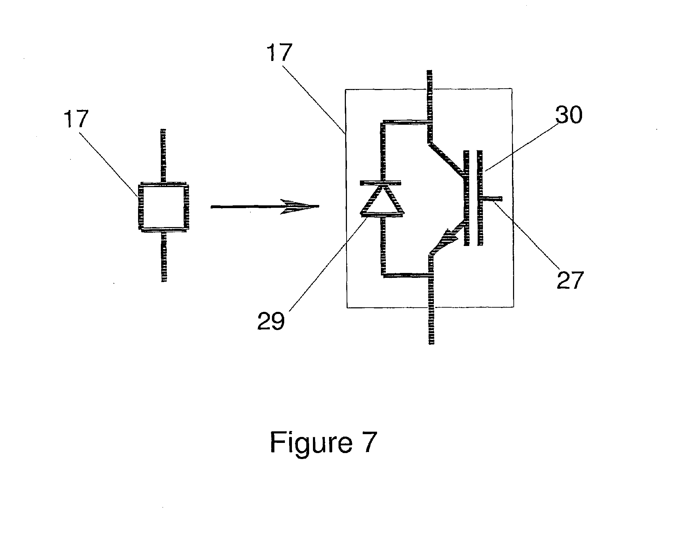

Figures 7, 8 and 9 disclose the details of the power converter and controller **6.** Figure 7 shows nomenclature for a switch **17** comprising a diode **29** and a solid-state switching device **30.** Preferentially, the solid-state switching device **30** is an insulated gate bipolar transistor (IGBT) although other switching devices may be used. The switch **29** is commanded to open or close through signals from the controller to the gate drive **27**.

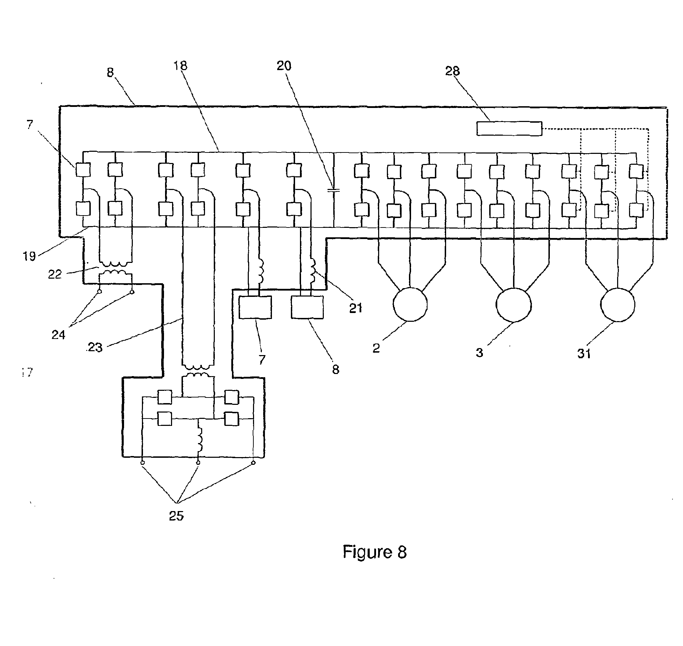

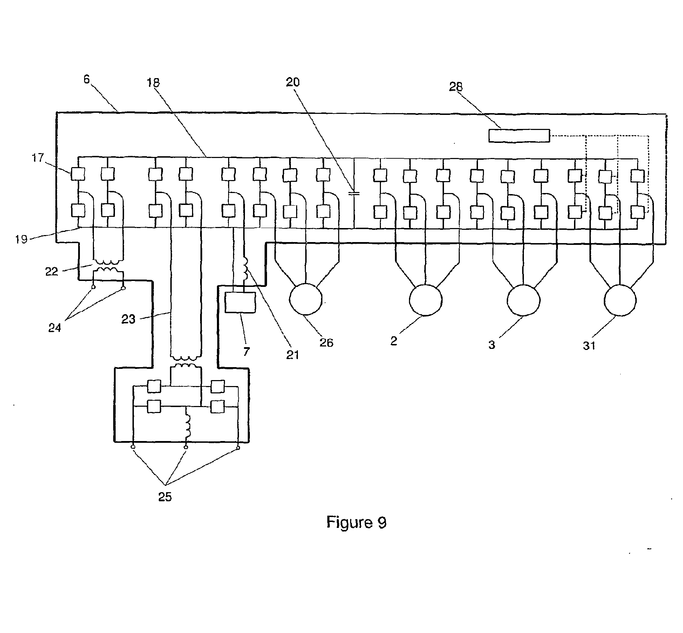

Figures 8 and 9 indicate the controller **28** that issues commands to each switch **29** in the system. For clarity, only a few representative connections are shown. In practice, all switches **29** receive input from the controller **28.** Additionally, the controller **28** may receive information from each switch **29** including temperature, state (open or closed), and fault condition (clear, warning, fault).

Each switch **29** is switched open or closed in response to a command from the controller **28.** Switching is conducted to energize or disable components or subsystems, for commutation, chopping, or to synthesize an AC waveform. The power ratings of the attached devices vary. The corresponding **power** ratings of the associated switches **15** may also vary in order to allow minimization of the overall size, weight and cost of the power converter and controller **6.**

The power converter and controller **6** has a DC bus with one bus bar **18** at elevated potential and a second bus **19** at a common potential. An H-bridge leg comprises two switches **29** connected in series where the pair of switches **29** connects the two bus bars of the DC bus **18, 19** and the point between the switches connects to one phase leg of the connected AC device.

A DC bus capacitor **20** serves several purposes individually or simultaneously. Mainly, the bus capacitor **20** provides dynamic energy storage necessary for the motor drive and buck-boost functions conducted by the inverter legs. A single DC bus capacitor **20** serves all of the phase legs in the power converter and controller **6**.

The power converter and controller **6** sources or sinks power from the motor/generators, **2**, **3**, **31** flywheel fast energy storage **26**, and the charging port **24** in AC format. The H-bridge legs of the power converter and controller can operate as a rectifier, an active rectifier, a motor drive, or an AC inverter in order to interface with these devices.

The H-bridge legs may also function as a chopper, or perform any other power processing accomplished by switching, such as those used for DC-DC conversion. These configurations are used for the interface to the battery **7** and the fast energy storage capacitor **8**.

Inductance is required for buck-boost functions and as part of the motor drive circuitry. Motors have non-negligible inductance that may be sufficient for this purpose. For devices with low inherent inductance such as batteries **7** or energy storage capacitors **8**, an inductor **21** may be incorporated in the circuit.

For motors MG1 **2**, MG2 **3**, MGR **31**, and the motor/generator in the flywheel **26**, portions of the power converter and controller **6** function as a bi-directional motor drive. Three-phase drive is typical but other numbers of phases may be used as well. Figures 3 and 4 show 3-phase drive configurations. To produce torque, a number of control strategies may be implemented including pulse width modulation (PWM), space vector control, and simple commutation.

Buck/boost converters perform DC to DC voltage conversion by using high frequency switching to cause dynamic response in an inductance. A capacitor **20** smooths out transients associated with the switching frequency of the converter. An inductor **21** or inherent inductance, a capacitor **20**, and a switch **15** are required to perform either a buck or boost function. Figures 8 and 9 show buck/boost circuits for the battery **7.** Figure 8 shows a buck/boost circuit for the fast energy capacitor **8.** In these examples, the use of two switches **17** for each buck/boost stage allows the inductor **21** and the capacitor **20** to be used for either buck or boost operation without reconfiguration.

Buck/boost converters are used for DC-DC conversion for higher power attached devices. An AC link **23** and transformers **22** are used for AC voltage conversion to the charger port **24.** An internal AC link **23** is used to allow transformation to a lower voltage so that a separate inverter subassembly can provide lower voltage output (12V, 42V) at the DC supply ports **25.**

The charger port **24** is shown as a single-phase system but a 3-phase system may be used as well. When the vehicle is at rest and connected to a utility grid, the charger circuitry may deliver energy to the DC bus **18**, **19** and from there to any of the attached devices. During V2G operation, energy from the battery **7**, fast energy system **8**, **26** or engine **1** via MG **1 2** may be delivered to the grid.

The DC output ports **25** are energized by a small active rectifier that operates at a voltage that is different from the voltage of the principal DC bus **18, 19**. This active rectifier uses switches **17** of the type used throughout the power converter and controller **6** and communicate with the controller **28**. The configuration shown in Figures 8 and 9 can source low power DC at two voltages, preferentially 12V and 42V.

All such variations are intended to be within the scope of the invention.

## Claims

1. A hybrid electric vehicle powertrain comprising:
an internal combustion engine (1); a first electric motor-generator (2) connected to the engine (1) and used only to start the engine (1) or supply electricity to a second motor-generator (3), wherein the second electric motor generator (3) is configured to supply traction power to the vehicle wheels (11), a first electrical energy storage device (7), a second electrical energy storage device (8); a power electronics system; a control system, and a charging system;
the first electrical energy storage device (7) being a battery (7) configured to deliver or absorb electrical energy when the vehicle is operated as a hybrid or when the vehicle is operated using stored electrical energy only;
the second energy storage device (8) being a flywheel, a capacitor or ultracapacitor or supercapacitor, or a battery, wherein the second energy storage device is configured to only absorb or deliver current as necessary to protect the first energy storage device (7) from current above a damage threshold for the first energy storage device (7);
wherein the second energy storage device is configured to transfer power to the system or absorb power from the system through a DC-DC power converter (8) where inductance (21) is added to the circuit to facilitate a buck-boost operation;
the second energy storage device has substantially less capacity that the first energy storage device;
the second energy storage device eliminates greater than 90% of shallow discharge cycles that would otherwise be experienced by the first energy storage device;
wherein the first and second energy storage devices and the electric motors exchange energy through a DC bus (18, 19);
wherein the power electronics system is responsive to the control system and transfers electrical energy from each of the first and second electrical energy storage devices and the first and second electric motor-generators to each other of the first and second electrical energy storage devices and first and second electric motor-generators;
the control system including means to determine and control the energy flow path through the power electronics system; and
wherein the charging system is configured to use externally supplied electricity to recharge either of both the first energy storage device and the second energy storage device.

2. The powertrain set forth in claim 1 including means for providing services to the electrical distribution grid (14) when the vehicle is connected to the grid.

3. The powertrain set forth in claim 1 configured as a parallel hybrid wherein a single motor/generator (2, 3) is used and this motor/generator is connected to the drivetrain between the engine (1) and the transmission (4).

4. The powertrain set forth in claim 1 configured as a parallel hybrid wherein a single motor/generator (2, 3) is used and this motor/generator is connected to the drivetrain between the transmission (4) and the driven wheels (11).

5. The powertrain set forth in claim 1 configured as a series hybrid wherein a single motor/generator (2, 3) is connected to the engine and one or more second motor/generators are connected drivably to the wheels (1).

6. The powertrain set forth in claim 1 wherein the engine (1) may use gasoline, ethanol, flex-fuel, diesel fuel, bio-diesel, natural gas, propane, or hydrogen.

7. The powertrain set forth in claim 1 wherein the powertrain is configured as a series hybrid and a fuel cell (16) that is used to produce electricity instead of an engine and generator.

8. The powertrain set forth in claim 1 where an additional motor-generator (2) is used to drive the traction wheels such that the front wheels and back wheels (11) are driven by different motors (2).

9. The powertrain set forth in claim 1 wherein the wheels (1) are driven by wheel motors (2).

10. The powertrain set forth in claim 2 wherein the services provided to the grid (14) may include frequency regulation, energy arbitrage, distributed storage, opportunity charging, backup power, and voltage stabilization.

## Patentansprüche

1. Antriebsstrang für ein elektrisches Hybridfahrzeug, umfassend:
eine interne Brennkraftmaschine (1); einen ersten elektrischen Motorgenerator (2), der mit der Brennkraftmaschine (1) verbunden ist und lediglich verwendet wird, um die Brennkraftmaschine (1) anzulassen oder um einem zweiten Motogenerator (3) Elektrizität zuzuführen, wobei der zweite elektrische Motorgenerator (3) konfiguriert ist, um den Fahrzeugrädern (11) Traktionsleistung zuzuführen; eine erste elektrische Energiespeichereinrichtung (7); eine zweite elektrische Energiespeichereinrichtung (8); ein Leistungselektroniksystem; ein Steuersystem und ein Ladesystem;
wobei die erste elektrische Energiespeichervorrichtung (7) eine Batterie (7) ist, die konfiguriert ist, um elektrische Energie zuzuführen oder zu absorbieren, wenn das Fahrzeug als Hybrid betrieben wird oder wenn das Fahrzeug lediglich unter Verwendung von gespeicherter elektrischer Energie betrieben wird;
wobei die zweite Energiespeichereinrichtung (8) eine Schwungscheibe, eine Kapazität, eine Ultrakapazität oder Superkapazität oder eine Batterie ist, wobei die zweite Energiespeichereinrichtung konfiguriert ist, um lediglich Strom nach Bedarf zu absorbieren oder zuzuführen, um die erste Energiespeichereinrichtung (7) vor Strom oberhalb einer Schadensschwelle für die erste Energiespeichereinrichtung (7) zu schützen;
wobei die zweite Energiespeichereinrichtung konfiguriert ist, um Leistung zu dem System zu transferieren oder Leistung von dem System zu absorbieren über einen Gleichstromwandler (8), in dem eine Induktivität (21) zu der Schaltung hinzugefügt ist, um einen Tief-Hochsetzbetrieb zu erleichtern;
wobei die zweite Energiespeichereinrichtung einen wesentlich geringeren Kapazitätswert als die erste Energiespeichereinrichtung aufweist;
wobei die zweite Energiespeichereinrichtung mehr als 90% von flachen Entladezyklen eliminiert, die ansonsten auf die erste Energiespeichereinrichtung wirken würden;
wobei die erste und zweite Energiespeichereinrichtung und die Elektromotoren Energie durch einen Gleichstrombus (18, 19) austauchen;
wobei das Leistungselektroniksystem auf das Steuersystem reagiert und elektrische Energie von jeder der ersten und zweiten elektrischen Energiespeichereinrichtung und dem ersten und zweiten elektrischen Motorgenerator zu jedem/jeder anderen der ersten und zweiten elektrischen Energiespeichereinrichtung und des ersten und zweiten elektrischen Motorgenerators überträgt;
wobei das Steuersystem eine Einrichtung umfasst, um den Energieflussweg durch das Leistungselektroniksystem zu bestimmen und zu steuern; und
wobei das Ladesystem konfiguriert ist, um extern zugeführte Elektrizität zu verwenden, um einen von beiden der ersten Energiespeichereinrichtung und der zweiten Energiespeichereinrichtung wieder aufzuladen.

2. Antriebsstrang gemäß Anspruch 1, weiterhin umfassend eine Einrichtung zur Bereitstellung von Diensten für das elektrische Verteilungsgitter (14), wenn das Fahrzeug mit dem Netz verbunden ist.

3. Antriebsstrang gemäß Anspruch 1, der als Parallel-Hybrid konfiguriert ist, wobei ein einzelner Motor/Generator (2, 3) verwendet wird und dieser Motor/Generator mit dem Antriebsstrang zwischen der Brennkraftmaschine (1) und dem Getriebe (4) verbunden ist.

4. Antriebsstrang gemäß Anspruch 1, der als Parallel-Hybrid konfiguriert ist, wobei ein einzelner Motor/Generator (2, 3) verwendet wird und dieser Motor/Generator mit dem Antriebsstrang zwischen dem Getriebe (4) und den angetriebenen Rädern (11) verbunden ist.

5. Antriebsstrang gemäß Anspruch 1, der als Reihen-Hybrid konfiguriert ist, wobei ein einzelner Motor/Generator (2, 3) mit der Brennkraftmaschine verbunden ist und ein oder mehrere zweite Motor(en)/Generator(en) treibbar mit den Rädern (1) verbunden ist (sind).

6. Antriebsstrang gemäß Anspruch 1, wobei die Brennkraftmaschine (1) Benzin, Ethanol, Flex-Kraftstoff, Dieselkraftstoff, Biodiesel, Naturgas, Propan oder Wasserstoff verwenden kann.

7. Antriebsstrang gemäß Anspruch 1, wobei der Antriebsstrang als ein Reihen-Hybrid und als eine Brennstoffzelle (16) konfiguriert ist, die verwendet wird, um Elektrizität an Stelle einer Brennkraftmaschine und eines Generators zu erzeugen.

8. Antriebsstrang gemäß Anspruch 1, wobei ein zusätzlicher Motorgenerator (2) verwendet wird, um die Traktionsräder derart anzutreiben, dass die Fronträder und Hinterräder (11) durch verschiedene Motoren (2) angetrieben werden.

9. Antriebsstrang gemäß Anspruch 1, wobei die Räder (1) durch Rädermotoren (2) angetrieben werden.

10. Antriebsstrang gemäß Anspruch 2, wobei die dem Netz (14) bereitgestellten Dienste Frequenzregelung, Energieverteilung, verteilte Speicherung, Gelegenheitsladen, Energieabsicherung und Spannungsstabilisierung enthalten können.

## Revendications

1. Groupe motopropulseur pour véhicule électrique hybride comprenant :
un moteur à combustion interne (1) ; un premier moteur-générateur électrique (2) raccordé au moteur (1) et utilisé seulement pour démarrer le moteur (1) ou délivrer l'électricité vers un deuxième moteur-générateur (3), lorsque le deuxième moteur-générateur électrique (3) est configuré pour délivrer la puissance de traction aux roues du véhicule (11), un premier dispositif de stockage d'énergie électrique (7), un deuxième dispositif de stockage d'énergie électrique (8) ; un système d'électronique de puissance ; un système de commande, et un système de charge ;
le premier dispositif de stockage d'énergie électrique (7) étant une batterie (7) configurée pour délivrer ou absorber l'énergie électrique lorsque le véhicule fonctionne en tant qu'hybride ou lorsque le véhicule fonctionne en utilisant uniquement l'énergie électrique stockée ;
le deuxième dispositif de stockage d'énergie (8) étant un volant, un condensateur ou un ultracondensateur ou un supercondensateur, ou une batterie, dans lequel le deuxième dispositif de stockage d'énergie est configuré pour seulement absorber ou délivrer le courant nécessaire pour protéger le premier dispositif de stockage d'énergie (7) d'un courant supérieur à un seuil d'endommagement pour le premier dispositif de stockage d'énergie (7) ;
dans lequel le deuxième dispositif de stockage d'énergie est configuré pour transférer la puissance vers le système ou absorber la puissance provenant du système par l'intermédiaire d'un convertisseur de puissance continu-continu (8) où une inductance (21) est ajoutée au circuit pour faciliter une opération de survoltage-dévoltage ;
le deuxième dispositif de stockage d'énergie possède sensiblement moins de capacité que le premier dispositif de stockage d'énergie ;
le deuxième dispositif de stockage d'énergie élimine plus de 90 % des cycles de décharge partielle qui seraient sinon ressentis par le premier dispositif de stockage d'énergie ;
dans lequel les premier et deuxième dispositifs de stockage d'énergie et les moteurs électriques échangent l'énergie par l'intermédiaire d'un bus C.C. (18, 19) ;
dans lequel le système d'électronique de puissance réagit au système de commande et transfère l'énergie électrique provenant de chacun des premier et deuxième dispositifs de stockage d'énergie et des premier et deuxième moteurs-générateurs électriques vers chaque autre parmi les premier et deuxième dispositifs de stockage d'énergie électrique et les premier et deuxième moteurs-générateurs électriques ;
le système de commande comprenant un moyen pour déterminer et commander le trajet de circulation de l'énergie à travers le système d'électronique de puissance ; et
dans lequel le système de charge est configuré pour utiliser de manière externe l'électricité délivrée pour recharger l'un ou l'autre parmi le premier dispositif de stockage d'énergie et le deuxième dispositif de stockage d'énergie.

2. Groupe motopropulseur selon la revendication 1, comprenant un moyen destiné à fournir des services au réseau de distribution d'électricité (14) lorsque le véhicule est connecté au réseau.

3. Groupe motopropulseur selon la revendication 1, configuré comme un véhicule hybride à configuration parallèle dans lequel un moteur-générateur unique (2, 3) est utilisé et ce moteur-générateur est raccordé au train de transmission entre le moteur (1) et la transmission (4).

4. Groupe motopropulseur selon la revendication 1, configuré comme un véhicule hybride à configuration parallèle dans lequel un moteur-générateur unique (2, 3) est utilisé et ce moteur-générateur est raccordé au train de transmission entre la transmission (4) et les roues entraînées (11).

5. Groupe motopropulseur selon la revendication 1, configuré comme un véhicule hybride à configuration en série dans lequel un moteur-générateur unique (2, 3) est raccordé au moteur et un ou plusieurs deuxièmes moteurs-générateurs sont raccordés aux roues (11) en entraînement.

6. Groupe motopropulseur selon la revendication 1, dans lequel le moteur (1) peut utiliser de l'essence, de l'éthanol, du polycarburant, du carburant diesel, du biodiesel, du gaz naturel, du propane ou de l'hydrogène.

7. Groupe motopropulseur selon la revendication 1, dans lequel le groupe motopropulseur est configuré comme un véhicule hybride à configuration en série et une pile à combustible (16) est utilisée pour produire de l'électricité à la place d'un moteur et d'un générateur.

8. Groupe motopropulseur selon la revendication 1, dans lequel un moteur-générateur supplémentaire (2) est utilisé pour entraîner les roues motrices d'une manière telle que les roues avant et arrière (11) sont entraînées par différents moteurs (2).

9. Groupe motopropulseur selon la revendication 1, dans lequel les roues (11) sont entraînées par des moteurs-roues (2).

10. Groupe motopropulseur selon la revendication 2, dans lequel les services fournis au réseau de distribution (14) peuvent comprendre une régulation de fréquence, un arbitrage d'énergie, un stockage réparti, une charge d'opportunité, une énergie de secours, et une stabilisation de tension.
